# EUROPEAN PATENT APPLICATION

(11) **EP 3 276 475 A1**
(43) Date of publication of application: **31.01.2018**
(21) Application number: 15886471.0
(22) Date of filing: 30.10.2015
(51) Int. Cl.: G06F 3/0482, G06F 3/0488

(54) **BROWSING ASSISTANCE METHOD FOR ELECTRONIC BOOK, AND BROWSING ASSISTANCE PROGRAM**

(30) Priority: 26.03.2015 JP 2015064731
(71) Applicant: Misumi Group Inc., Tokyo 112-8583 (JP)
(72) Inventor: TANIGUCHI, Koichi, Tokyo 112-8583 (JP)
(74) Representative: Schön, Christoph
(86) International application number: PCT/JP2015/080734
(87) International publication number: WO 2016/151919

(57) **Abstract**

When a contact position detection circuit (21) detects that an indicator contacts an initial index (50), an enlarged index displayer (12) displays an enlarged index (60) in which an enlarged item button (61h) obtained by enlarging an item button (51) selected by the contact to have a first size, and enlarged item buttons (61f), (61g) and (61i) to (61l) having gradually smaller sizes than the first size as the buttons are apart from the enlarged item button (61h) are arranged. When the indicator F is slid in an upward direction, the enlarged index changer (13) causes the touched enlarged item button (61g) to have the largest second size, and causes peripheral enlarged item buttons (61e), (61f) and (61h) to (61k) to have gradually smaller sizes than the second size as the buttons are apart from the enlarged item button (61g).

## Description

### Technical Field

The present invention relates to a method and program for supporting electronic book browsing through a touch panel display device.

### Background Art

Conventionally, various methods for facilitating electronic book browsing through a touch panel device (a device including a touch panel display, such as a tablet terminal, smartphone, or personal computer) have been proposed (e.g., see Patent Literature 1).

According to Patent Literature 1, when a viewer continuously touches a certain location on a touch panel display for at least a predetermined period of time, an enlargement target area centered on the touched location is set, and an enlarged image of the enlargement target area is displayed in a manner overlaid on the original image. Such display allows the viewer to view the original image and its partially enlarged image at the same time. Consequently, the browsability of information displayed on the touch panel display can be improved.

### Citation List

### Patent Literature

Patent Literature 1: Japanese Patent Laid-Open No. 2010-237928

### Summary of Invention

### Technical Problem

In browsing an electronic book, such as a brochure, through a touch panel device, it is desired that a viewer be allowed to retrieve quickly a location where targeted information is described while flipping pages in a manner analogous to the case of browsing a printed book.

The present invention has been made in view of such a background, and has an object to provide a browsing assistance method for an electronic book and a browsing assistance program for an electronic book that can quickly retrieve a location where targeted information is described.

### Solution to Problem

The present invention has been made to achieve the object described above. A browsing assistance method for an electronic book of the present invention is a browsing assistance method for an electronic book through a touch panel device that includes: a touch panel display; a contact position detector that detects an indicator's contact position with the touch panel display; and a controller that changes display of the touch panel device according to the indicator's contact position detected by the contact position detector, the method including:
an initial index display step of causing the controller to display an initial index on the touch panel display when displaying an electronic book browsing screen on the touch panel display, the initial index including a plurality of item buttons individually assigned to respective items of the electronic book and being arranged in a first direction;
an enlarged index display step of causing the controller to display an enlarged index on the touch panel display when the contact position detector detects that the indicator comes into contact with the initial index, the enlarged index including: an enlarged selected item button obtained by enlarging a selected item button that is the item button displayed on the indicator's contact location to have a first size; and enlarged peripheral item buttons that are the item buttons of a predetermined number sequential from the selected item button in the initial index obtained by enlarging the buttons to have gradually smaller sizes than the first size as the buttons are apart from the enlarged selected item button, the enlarged selected item and the enlarged peripheral item buttons being arranged in an order identical to an order of the initial index in the first direction; and
an enlarged index change step of causing the controller to change the enlarged index display to an enlarged shift display when the contact position detector detects that the indicator in contact with the enlarged selected item button of the enlarged index slides in the first direction and comes into contact with one of the enlarged peripheral item buttons, the shift display including: the enlarged peripheral item button with which the indicator is in contact being enlarged to have a second size; and the item buttons of a second predetermined number continuous from the item button corresponding to the enlarged peripheral item button with which the indicator is in contact in the initial index being enlarged to have gradually smaller sizes than the second size as the buttons are apart from the enlarged peripheral item button with which the indicator is in contact, and being arranged in the first direction in an order identical to the order of the initial index.

According to the present invention, when the touch panel device performs electronic book browsing display, the controller displays the initial index through the initial index display step. When the user (viewer) of the touch panel device touches the initial index with the indicator (the finger of the user, touch pen, etc.), the controller displays the enlarged index on the touch panel display through the enlarged index display step. Here, the enlarged index includes: the enlarged selected item button obtained by enlarging the item button (selected item button) selected in the initial index to have the first size; and the enlarged peripheral item buttons obtained by enlarging the peripheral item buttons sequential from the selected item button in the initial index so as to be gradually smaller than the first size as the buttons are apart from the enlarged selected item button, these buttons being arranged in the same order as that of the initial index.

Consequently, the user can easily confirm the item selected by the user through the enlarged selected item button having the largest size, and can intuitively recognize the positions of other items around the selected item through variation in the sizes of the enlarged peripheral item buttons (the smaller the size is, the more apart the location at which the button resides is.) by viewing the enlarged index.

When the user slides the indicator in contact with the enlarged index in the first direction (the arrangement direction of the enlarged selected item button and the enlarged peripheral item buttons), the enlarged index change step causes the controller to change the display of the enlarged index to an enlarged shift display that includes: the enlarged peripheral item button with which the indicator is in contact being enlarged to have a second size; and the item buttons as many as the second predetermined number of items continuous from the item button corresponding to the enlarged peripheral item button with which the indicator is in contact in the initial index being enlarged to have gradually smaller sizes than the second size as the buttons are apart from the enlarged peripheral item button with which the indicator is in contact and being arranged in an order identical to the order of the initial index.

The first size and the second size may be the same as or different from each other.

In this case, the user can easily recognize that the selected item has been switched according to the slide operation of the indicator by viewing the change in the display state of the enlarged index (the button with which the indicator is in contact has the largest size, and the peripheral buttons have gradually smaller sizes as the buttons are apart from the contact location of the indicator).

Consequently, the user can easily retrieve the item that the user wishes to browse by sliding the indicator in contact with the enlarged index in the first direction, and can easily browse the electronic book.

Next, the browsing assistance program for an electronic book of the present invention is
a browsing assistance program for an electronic book to be executed by a controller of a touch panel device that includes: a touch panel display; a contact position detector that detects an indicator's contact position with the touch panel display; and the controller that changes display of the touch panel display according to the indicator's contact position detected by the contact position detector, the program causing the controller to function as:
wherein the program causes the controller to function as
an initial index displayer that displays an initial index on the touch panel display when displaying an electronic book browsing screen on the touch panel display, the initial index including a plurality of item buttons individually assigned to respective items of the electronic book and being arranged in a first direction;
an enlarged index displayer that displays an enlarged index on the touch panel display when the contact position detector detects that the indicator comes into contact with the initial index, the enlarged index including: an enlarged selected item button obtained by enlarging a selected item button that is the item button displayed on the indicator's contact location to have a first size; and enlarged peripheral item buttons that are the item buttons of a predetermined number sequential from the selected item button in the initial index, the enlarged peripheral item buttons obtained by enlarging the buttons to have gradually smaller sizes than the first size as the buttons are apart from the selected item button, the enlarged selected item button and the enlarged peripheral item buttons being arranged in an order identical to an order of the initial index in the first direction; and
an enlarged index changer that changes the enlarged index display to an enlarged shift display when the contact position detector detects that the indicator in contact with the enlarged selected item button of the enlarged index slides in the first direction and comes into contact with one of the enlarged peripheral item buttons, the enlarged shift display including: the enlarged peripheral item button with which the indicator is in contact being enlarged to have a second size; and the item buttons of a second predetermined number continuous from the item button corresponding to the enlarged peripheral item button with which the indicator is in contact in the initial index being enlarged to have gradually smaller sizes than the second size as the buttons are apart from the enlarged peripheral item button with which the indicator is in contact, and being arranged in the first direction in an order identical to the order of the initial index.

According to the present invention, when the touch panel device performs electronic book browsing display, the initial index displayer displays the initial index. When the user of the touch panel device touches the initial index with the indicator, the enlarged index displayer displays the enlarged index on the touch panel display.

The user can easily confirm the item selected by the user through the enlarged selected item button having the largest size, and can intuitively recognize the positions of other items around the selected item through variation in the sizes of the enlarged peripheral item buttons (the smaller the size is, the more apart the position at which the button resides is.) by viewing the enlarged index.

When the user slides the indicator in contact with the enlarged index in the first direction (the arrangement direction of the enlarged selected item button and the enlarged peripheral item buttons), the enlarged index changer changes the display of the enlarged index to an enlarged shift display that includes: the enlarged peripheral item button with which the indicator is in contact being enlarged to have a second size; and the item buttons as many as the second predetermined number of items continuous from the item button corresponding to the enlarged peripheral item button with which the indicator is in contact in the initial index being enlarged to have gradually smaller sizes than the second size as the buttons are apart from the enlarged peripheral item button with which the indicator is in contact and being arranged in an order identical to the order of the initial index.

The first size and the second size may be the same as or different from each other.

In this case, the user can easily recognize that the selected item has been switched according to the slide operation of the indicator by viewing the change in the display state of the enlarged index (the button with which the indicator is in contact has the largest size, and the peripheral buttons have gradually smaller sizes as the buttons are apart from the contact location of the indicator).

Consequently, the user can easily retrieve the item that the user wishes to browse by sliding the indicator in contact with the enlarged index in the first direction, and can easily browse the electronic book.

The browsing assistance program for an electronic book causes the controller to function as
a first page display switcher that performs page feed display that feeds a page of the electronic book displayed on the touch panel display, or page return display that returns the page when the contact position detector detects that the indicator in contact with the enlarged index is slid in a second direction different from the first direction.

According to this configuration, the user can feed or return the page in the selected item of the electronic book by selecting the item through the slide operation in the first direction in the enlarged index and subsequently performing the slide operation in the second direction, and can quickly confirm the details of description of each page.

The browsing assistance program for an electronic book causes the controller to function as
a second page display switcher that performs index feed display that feeds a page of the electronic book displayed on the touch panel display in units of the items, or index return display that returns the page in units of the items, when the contact position detector detects that the indicator in contact with the enlarged index is slid in a third direction different from the first direction and is separated from the touch panel display.

According to this configuration, the user can easily switch the item of the electronic book to be selected by selecting the item through the slide operation in the first direction for the enlarged index and subsequently performing a flicking operation (flick operation) in the second direction.

According to the browsing assistance program for an electronic book,
when the enlarged index displayer displays the enlarged index on the touch panel display, the enlarged index displayer displays a page of an item of the electronic book assigned with the selected item button on the touch panel display, and
when the enlarged index changer displays the enlarged shift display on the touch display, the enlarged index changer displays, on the touch panel display, a page of the item of the electronic book assigned with the item button corresponding to the enlarged peripheral item button with which the indicator is in contact.

According to this configuration, the page of the item of the electronic book assigned to the item button corresponding to the enlarged selected button selected by the user with the indicator or the enlarged peripheral item button is displayed on the touch panel display. Consequently, the user searches the selected item while confirming the contents of the electronic book.

### Brief Description of Drawings

FIG. 1 is a diagram illustrating an appearance of a touch panel device that executes a browsing assistance method for an electronic book and a browsing assistance program for an electronic book according to the present invention.
FIG. 2 is a configuration diagram of the touch panel device shown in FIG. 1.
FIG. 3 is a first flowchart of a process for a touch operation.
FIG. 4 is a second flowchart of a process for a touch operation.
FIG. 5 is an illustrative diagram of an initial display state of an enlarged index.
FIG. 6A is an initial state of the enlarged index. FIG. 6B is an illustrative diagram in a case where a slide operation in an upward direction is performed for the enlarged index.
FIG. 7 is an illustrative diagram in a case where a slide operation in a downward direction is performed for the enlarged index.
FIG. 8A is an illustrative diagram in a case where a slide operation in a right direction is performed to the enlarged index. FIG. 8B is an illustrative diagram in a case where a flick operation in a left direction is performed for the enlarged index.

### Description of Embodiments

An example of an embodiment of the present invention is described with reference to FIG.s 1 to 8.

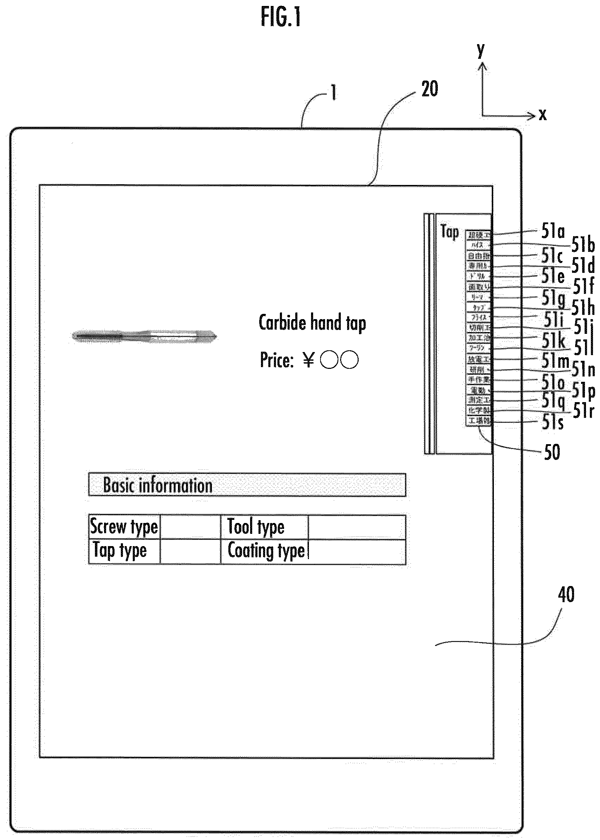

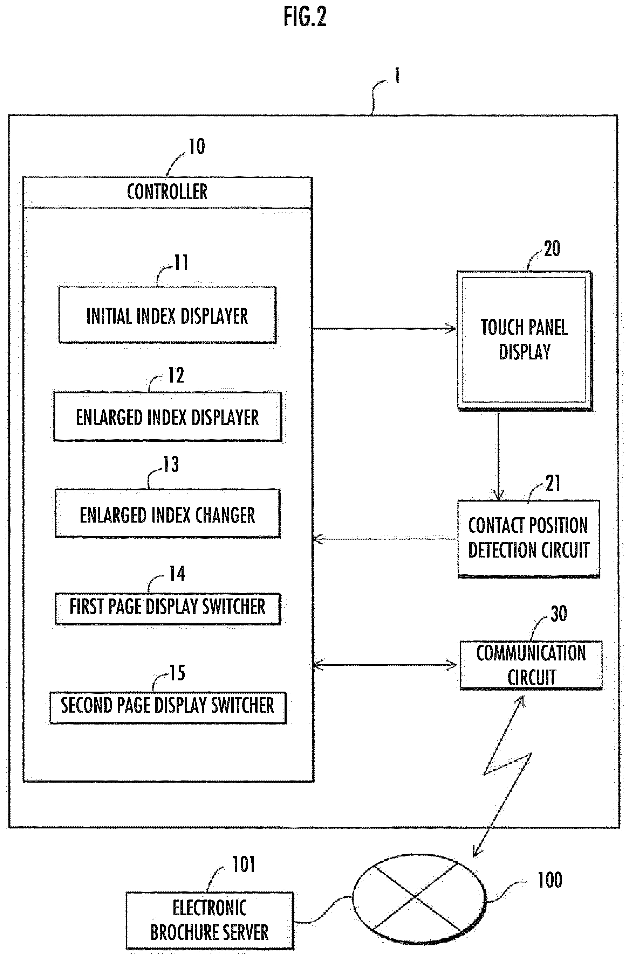

Referring to FIG. 1, a touch panel device 1 that executes a browsing assistance method for an electronic book and a browsing assistance program for an electronic book according to the present invention is a mobile tablet terminal, and includes a touch panel display 20 disposed on a front surface of a casing, and a controller 10 that is disposed in the casing and controls display of the touch panel display 20 (see FIG. 2). For example, the touch panel display 20 includes a liquid crystal display, and a transparent touch panel overlaid on the surface of this liquid crystal display.

FIG. 1 shows a state where a browsing screen 40 for an electronic brochure of tools (corresponding to an electronic book of the present invention) is displayed. An initial index 50 is displayed at an upper right part of the touch panel display 20.

The initial index 50 includes multiple item buttons 51 (51a, 51b,..., 51s) that are individually assigned to respective items (categories) in the electronic brochure of tools and are arranged in a vertical direction (y direction in the diagram, and corresponding to a first direction in the present invention). As the item buttons 51, 19 item buttons 51a, 51b,..., 51s separately assigned respective items "Carbide end mill", "High-speed steel end mill", "Free designation straight tooth end mill", "Dedicated cutter", "Drill", "Chamfering and centering tool", "Reamer", "Tap", "Milling chip cutter", "Cutting tool", "Processing jig", "Tooling", "Electric spark tool", "Grinding and polishing device", "Manual operation tool", "Electric and pneumatic tool", "Measurement tool", "Chemical product" and "Factory articles" are arranged sequentially from the top.

Next, referring to FIG. 2, the touch panel device 1 includes not only the controller 10 and the touch panel display 20, but also a contact position detection circuit 21 (corresponding to a contact position detector of the present invention) that detects the position of an indicator (a finger of a user, a touch pen, etc.) being in contact with the touch panel display 20, and a communication circuit 30.

The controller 10 is an electronic circuit unit that includes a CPU, a memory, and an interface circuit, which are not shown, and causes the CPU to execute a browsing assistance program for an electronic book held in the memory, thereby serving as an initial index displayer 11, an enlarged index displayer 12, an enlarged index changer 13, a first page display switcher 14, and a second page display switcher 15, which are described later.

The controller 10 performs an electronic book browsing process according to the user's touch operation on the touch panel display 20. In this case, data on the electronic book may be held in the memory, or downloaded by the communication circuit 30 from an electronic brochure server 101 via a communication network 100.

Next, according to the flowcharts of FIG.s 3 to 4, an electronic book browsing support process executed by the controller 10 is described.

When the user performs an operation of activating an electronic book browsing application, the controller 10 causes the CPU to execute programs of this application (including the browsing assistance program for an electronic book of the present invention) to display the electronic book browsing screen 40 on the touch panel display 20 as shown in FIG. 1. The programs of the electronic book browsing application may be preliminarily held in the memory, or downloaded from the electronic brochure server 101 or the like.

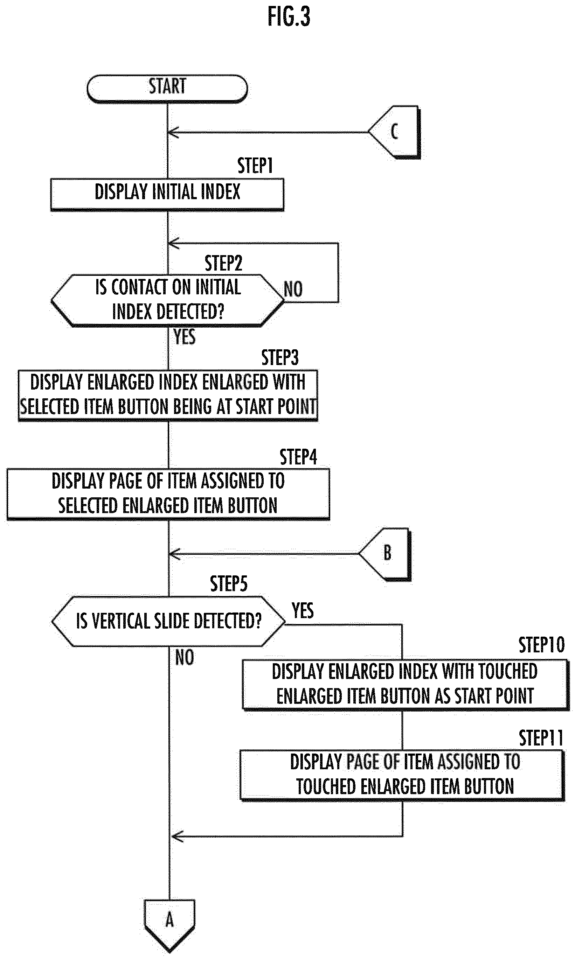

The controller 10 then executes the processes according to the flowcharts of FIG.s 3 to 4. STEP1 of FIG. 3 is a process by the initial index displayer 11. As shown in FIG. 1, the initial index displayer 11 displays the initial index 50 at an upper right location on the touch panel display 20. The process of STEP1 by the initial index displayer 11 corresponds to an initial index display step in the electronic book browsing assistance method of the present invention.

Subsequent STEP2 to STEP4 are processes by the enlarged index displayer 12. In STEP2, the enlarged index displayer 12 causes the contact position detection circuit 21 to determine whether the indicator's contact on the initial index 50 is detected or not (whether the touch operation is performed by the user on the initial index 50 or not).

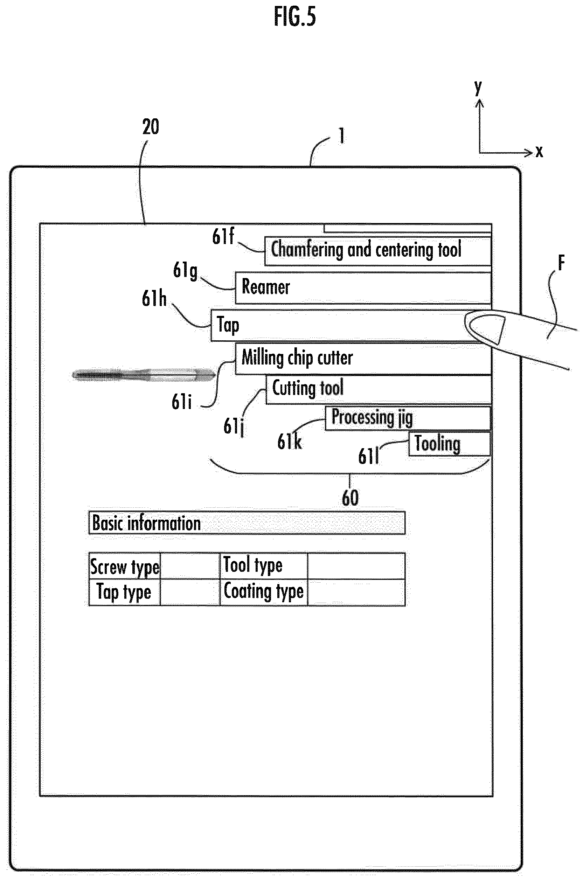

When the indicator's contact on the initial index 50 is detected, the processing proceeds to STEP3, and the enlarged index displayer 12 displays an enlarged index 60 as shown in FIG. 5. In the example in FIG. 5, the enlarged index 60 displays an enlarged item button 61h "Tap" (enlarged selected item button) obtained by enlarging the item button 51h "Tap" (selected item button) in the initial index 50 with which the finger F of the user is in contact to have a first size.

In FIG.s 5 to 8, with respect to the item buttons 51 (51a to 51s) of the initial index 50 shown in FIG. 1, enlarged item buttons 61 enlarged in the enlarged index 60 are assigned the respective same alphabets and shown.

The enlarged index displayer 12 arranges the enlarged item buttons 61f, 61g, 61i, 61k and 61l in the same order as that in the initial index 50 and displays these buttons, which are vertically sequential six (corresponding to the first predetermined number of items according to the present invention) item buttons 51 (peripheral item buttons) from the item button 51h "Tap" in the initial index 50, i.e., the upward sequential item button 51g "Reamer" and item button 51f "Chamfering and centering tool", and the downward sequential item button 51i "Milling chip cutter", item button 51j "Cutting tool", item button 51k "Processing jig" and item button 51l "Tooling", with these buttons being enlarged in a manner where the more apart the buttons are from the enlarged item button 61h "Tap", the gradually smaller the buttons become.

Thus, when the initial index 50 is touch-operated, the enlarged index 60 is displayed; in this index, the touch-operated item button 51 (the selected item button, or the item button 51h "Tap" in FIG. 5) is adopted as a start point, the selected item button is enlarged to have the largest size (the enlarged item button 61h in FIG. 5), and the peripheral item buttons 51 are enlarged in a manner where the more apart from the selected item button the peripheral item buttons 51 are, the gradually smaller these buttons become, thereby allowing the user to view easily the selected item.

Furthermore, the user can intuitively recognize where other items around the selected item are in the electronic book according to the differences in the sizes of the enlarged item buttons.

In subsequent STEP4, the enlarged index displayer 12 displays a page of the item of the electronic book selected by the touch operation on the enlarged index 60 (Tap in FIG. 5) is displayed on the touch panel display 20.

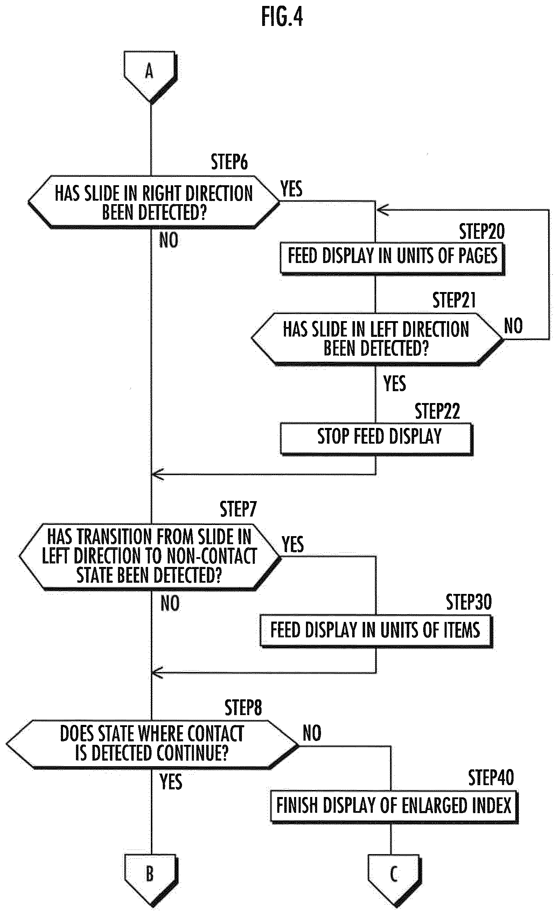

Subsequent STEP5, and STEP10 to STEP11 branched from STEP5 are processes by the enlarged index changer 13. In STEP5, the enlarged index changer 13 causes the contact position detection circuit 21 to determine whether the indicator in contact with the enlarged index 60 has been vertically slid or not (whether the slide operation has been performed for the enlarged index 60 by the user or not). If a slide in the vertical direction has been detected, the processing branches to STEP10. If no vertical slide has been detected, the processing proceeds to STEP6 of FIG. 4.

In STEP10, the enlarged index changer 13 displays the enlarged index 60 such that the enlarged item buttons 61 (enlarged selected item button) with which the indicator is in contact is enlarged to have a second size and displayed, and in the initial index 50, enlarged item buttons (enlarged peripheral item buttons) obtained by enlarging the seven (corresponding to the second determined number of items according to the present invention) item buttons 51 sequential from the item button (the item button assigned the same item) 51 corresponding to the enlarged selected item button to have sizes where the more apart from the selected enlarged item button the buttons are, the gradually smaller the buttons become (enlarged shift display).

The process of STEP5 and STEP10 to STEP11 by the enlarged index displayer 12 correspond to an enlarged index display step in the browsing assistance method for an electronic book of the present invention.

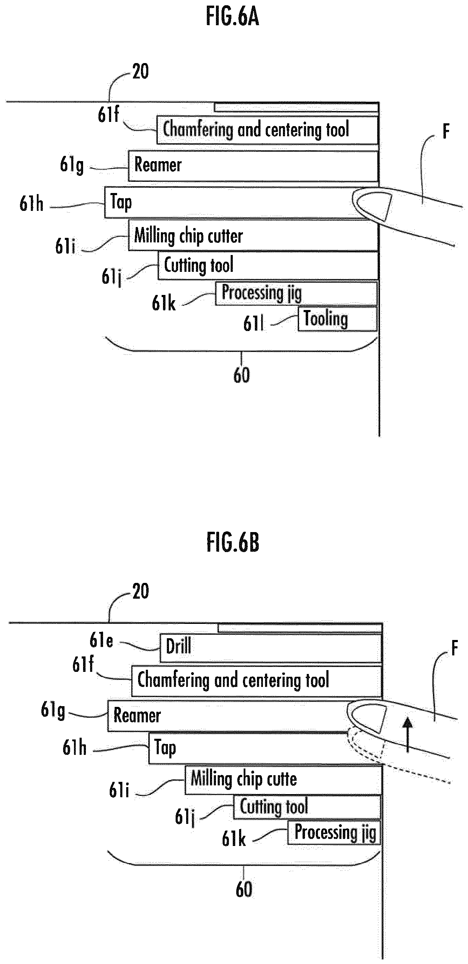

For example, FIG. 6B shows a case of transition from the state where the finger F of the user touches the enlarged item button 61h "Tap" shown in FIG. 6A to a state where the finger F is slid in the upward direction to touch the enlarged item button 61g "Reamer". In this case, the enlarged index changer 13 displays the enlarged item button 61g "Reamer" at the largest size, and displays the peripheral enlarged item buttons 61e to 61f and 61h to 61k at gradually smaller sizes with the buttons being apart from the enlarged item button 61g "Reamer".

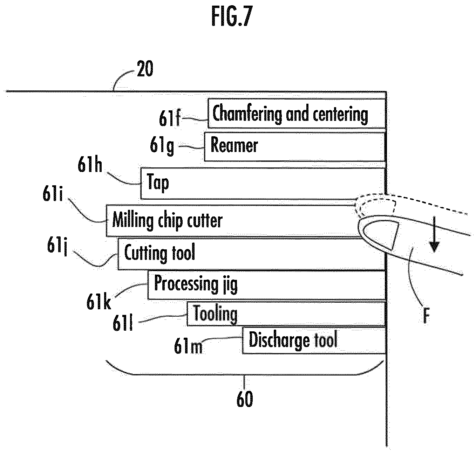

FIG. 7 shows a case of transition from the state where the finger F of the user touches the enlarged item button 61h "Tap" shown in FIG. 6A to a state where the finger F is slid in the downward direction to touch the enlarged item button 61i "Milling chip cutter". In this case, the enlarged index changer 13 displays the enlarged item button 61i "Milling chip cutter" at the largest size, and displays the peripheral enlarged item buttons 61f to 61h and 61i to 61m at gradually smaller sizes with the buttons being apart from the enlarged item button 61i "Milling chip cutter".

Thus, according to the user's slide operation in the vertical direction at the touch location, the enlarged index 60 is displayed such that the touched (selected) enlarged item button 61 is displayed at the largest size, and the peripheral enlarged item buttons 61 have gradually smaller sizes. Consequently, the selected item can be easily confirmed and it intuitively recognized where the locations of the other items reside by the user.

In subsequent STEP11, the enlarged index changer 13 displays the page of the item assigned to the touched enlarged item button 61 ("Reamer" in FIG. 6B, and "Milling chip cutter" in FIG. 7), and the processing proceeds to STEP6 of FIG. 4.

The process of STEP5 and STEP10 to STEP11 by the enlarged index changer 13 correspond to an enlarged index change step in the browsing assistance method for an electronic book of the present invention.

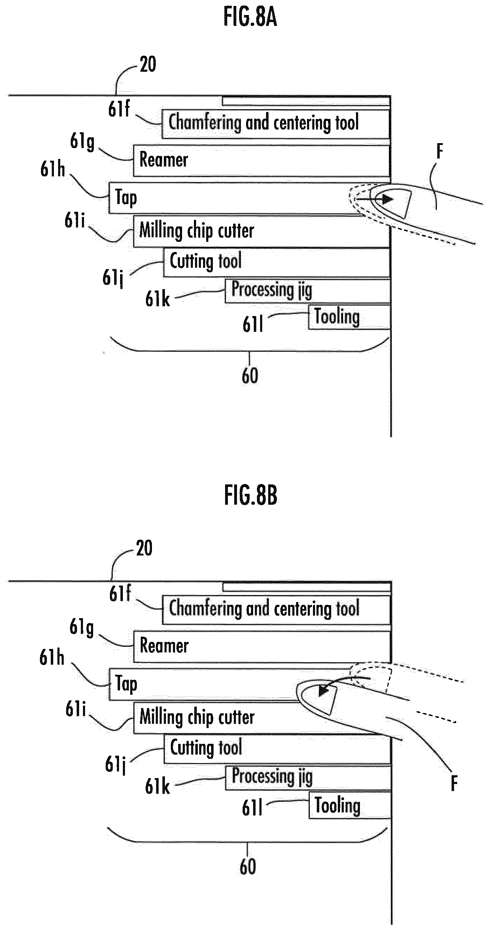

STEP6, and STEP20 to STEP22 branched from STEP6 are processes by the first page display switcher 14. In STEP6, the first page display switcher 14 determines whether the contact position detection circuit 21 has detected whether a slide in the right direction (corresponding to a second direction of the present invention) of the indicator in contact with the enlarged index 60 or not (as shown in FIG. 8A, whether the slide operation in the right direction has been performed by the user or not).

If a slide in the right direction has been detected, the processing branches to STEP20. If no slide in the right direction has been detected, the processing proceeds to STEP7. In STEP20, the first page display switcher 14 performs feed display in units of pages (page feed display) that sequentially switches the page of the electronic book displayed on the touch panel display 20 to the page that is one-or-ten-page beyond the current page and displays the switched page.

In subsequent STEP21, the first page display switcher 14 determines whether the contact position detection circuit 21 has detected a leftward slide of the indicator in contact with the enlarged index 60 or not (whether the slide operation in the left direction has been performed by the user or not).

When the leftward slide is detected, the processing proceeds to STEP22, and the first page display switcher 14 stops the feed display in units of pages and the processing proceeds to STEP7. When the slide in the left direction is not detected in STEP21, the processing returns to STEP20, and the first page display switcher 14 continues the feed display in units of pages.

The process of STEP6 and STEP20 to STEP22 by the first page display switcher 14 correspond to a page display switch step in the browsing assistance method for an electronic book of the present invention.

Subsequent STEP7, and STEP30 branched from STEP7 are processes by the second page display switcher 15.

In STEP7, the second page display switcher 15 determines whether the contact position detection circuit 21 has detected whether the indicator in contact with the enlarged index 60 has slid in the left direction (corresponding to a third direction different from the first direction of the present invention) and become non-contact or not (as shown in FIG. 8B, whether the user has performed an operation of sliding the finger in the left direction and disengages the finger (flick operation) or not).

When the slide in the left direction and disengagement are detected, the processing branches to STEP30. When the slide in the left direction and disengagement are not detected, the processing proceeds to STEP8.

In STEP30, the second page display switcher 15 performs feed display in units of items (index feed display) that sequentially switches the page of the electronic book displayed on the touch panel display 20 to the initial page of the following item and displays the switched page, and the processing proceeds to STEP8.

According to the processes of STEP7 and STEP30, the user performs the flick operation in the left direction with the finger that touches the enlarged index 60, thereby easily allowing transition from the currently browsed item to the next item.

In STEP8, the controller 10 determines whether the state where the contact position detection circuit 21 detects the indicator's contact with the enlarged index 60 continues or not. In a case where the state where the indicator's contact with the enlarged index 60 is detected continues, the processing proceeds to STEP5 of FIG. 3. In this case, the display of the enlarged index 60 continues.

On the contrary, in a case where the indicator's contact with the enlarged index 60 becomes undetected, the processing branches to STEP40, the controller 10 finishes the display of the enlarged index 60, and the processing proceeds to STEP1 of FIG. 3. In this case, the display of the enlarged index 60 disappears, and the initial index 50 is displayed.

This embodiment describes the case where the user touches the touch panel display 20 with the finger to perform the operation. Processes in a case where the touch panel display 20 is operated using a touch pen or the like are analogous.

In this embodiment, the feed display in units of pages is performed when the user slides the finger that touches the enlarged index 60 in the right direction. Alternatively, the feed display in units of pages may be performed when the user slides the finger in the left direction. Alternatively, when the touching finger slides in the right direction, the feed display (page feed display) in units of pages may be performed. When the touching finger slides in the left direction, return display in units of pages (page return display, which sequentially displays pages previous from the currently displayed page) may be performed. In this case, processes in response to the slide directions (right direction and left direction) and page feed and page return may be freely defined.

In this embodiment, when the user flicks the finger that touches the enlarged index 60 in the left direction, the index feed display in units of items is performed. Alternatively, index return display that returns the page in units of items may be performed. Alternatively, in response to the direction of the flick operation (right direction or left direction), the index feed display and the index return display may be switched.

In this embodiment, the first page display switcher 14 and the second page display switcher 15 switch the page display. Alternatively, also in a case where only the first page display switcher 14 or only the second page display switcher 15 switches the page display, the advantageous effects of the present invention can be obtained. Also in a case where neither the page display switches by the first page display switcher 14 nor the second page display switcher 15 is performed, the advantageous effects of the present invention can be obtained.

In this embodiment, in STEP4 and STEP11 of FIG. 3, the page of the item assigned to the enlarged item button selected by the user is quickly displayed. Alternatively, it may be configured such that while the user slides the indicator in the vertical direction to perform the operation of selecting the enlarged item button, the page of the item assigned to the enlarged item button is not displayed, and when the user issues an instruction of displaying the page of the item assigned to the enlarged item button through the flick operation or the like in the right or left direction, the page of the item assigned to the enlarged item button may be displayed.

According to this embodiment, in STEP6 of FIG. 4, the second direction of the present invention that is the shift direction of the indicator in a case of page feed instruction is the right direction. Alternatively, the direction may be the left direction. According to this embodiment, in STEP7 of FIG. 4, the third direction of the present invention that is the shift direction in a case of page feed instruction in units of items is the left direction. Alternatively, the direction may be the right direction. In this case, the right direction and the left direction are not strictly defined, and encompass the upper right direction, lower left direction and the like.

In this embodiment, the mobile tablet terminal in FIG. 1 is described as the touch panel device of the present invention. Alternatively, it is effective to apply the present invention to another type of touch panel devices, for example, touch panel devices arranged at sites having restricted installation spaces, such as indicators arranged in cockpits of aircraft and spacecraft.

This embodiment describes the electronic brochure of tools as the electronic book of the present invention. The present invention is applicable also to cases of browsing various electronic books, such as magazines, dictionaries, telephone directories, and instruction manuals.

### Reference Signs List

1...Touch panel device, 10...Controller, 11...Initial index displayer, 12...Enlarged index displayer, 13...Enlarged index changer, 14...First page display switcher, 15...Second page display switcher, 20...Touch panel display, 21...Contact position detection circuit, 30...Communication circuit, 40...Electronic book browsing screen, 50...Initial index, 51...Item button, 60...Enlarged index, 61...Enlarged item button, F...Finger (indicator) of user.

## Claims

1. A browsing assistance method for an electronic book through a touch panel device that comprises: a touch panel display; a contact position detector that detects an indicator's contact position with the touch panel display; and a controller that changes display of the touch panel display according to the indicator's contact position detected by the contact position detector, the method comprising:
an initial index display step of causing the controller to display an initial index on the touch panel display when displaying an electronic book browsing screen on the touch panel display, the initial index including a plurality of item buttons individually assigned to respective items of the electronic book and being arranged in a first direction;
an enlarged index display step of causing the controller to display an enlarged index on the touch panel display when the contact position detector detects that the indicator comes into contact with the initial index, the enlarged index including: an enlarged selected item button obtained by enlarging a selected item button that is the item button displayed on the indicator's contact location to have a first size; and enlarged peripheral item buttons that are the item buttons of a predetermined number sequential from the selected item button in the initial index, which are obtained by enlarging the buttons to have gradually smaller sizes than the first size as the buttons are apart from the enlarged selected item button, the enlarged selected item button and the enlarged peripheral item buttons being arranged in an order identical to an order of the initial index in the first direction; and
an enlarged index change step of causing the controller to change the enlarged index display to an enlarged shift display when the contact position detector detects that the indicator in contact with the enlarged selected item button of the enlarged index slides in the first direction and comes into contact with one of the enlarged peripheral item buttons, the enlarged shift display including: the enlarged peripheral item button with which the indicator is in contact being enlarged to have a second size; and the item buttons of a second predetermined number continuous from the item button corresponding to the enlarged peripheral item button with which the indicator is in contact in the initial index being enlarged to have gradually smaller sizes than the second size as the buttons are apart from the enlarged peripheral item button with which the indicator is in contact, and being arranged in the first direction in an order identical to the order of the initial index.

2. A browsing assistance program for an electronic book to be executed by a controller of a touch panel device that comprises: a touch panel display; a contact position detector that detects an indicator's contact position with the touch panel display; and the controller that changes display of the touch panel device according to the indicator's contact position detected by the contact position detector, the program causing the controller to function as:
an initial index displayer that displays an initial index on the touch panel display when displaying an electronic book browsing screen on the touch panel display, the initial index including a plurality of item buttons individually assigned to respective items of the electronic book and being arranged in a first direction;
an enlarged index displayer that displays an enlarged index on the touch panel display when the contact position detector detects that the indicator comes into contact with the initial index, the enlarged index including: an enlarged selected item button obtained by enlarging a selected item button that is the item button displayed on the indicator's contact location to have a first size; and enlarged peripheral item buttons that are the item buttons of a predetermined number sequential from the selected item button in the initial index, which are obtained by enlarging the buttons to have gradually smaller sizes than the first size as the buttons are apart from the selected item button, the enlarged selected item button and the enlarged peripheral item buttons being arranged in an order identical to an order of the initial index in the first direction; and
an enlarged index changer that changes the enlarged index display to an enlarged shift display when the contact position detector detects that the indicator in contact with the enlarged selected item button of the enlarged index slides in the first direction and comes into contact with one of the enlarged peripheral item buttons, the enlarged shift display including: the enlarged peripheral item button with which the indicator is in contact being enlarged to have a second size; and the item buttons of a second predetermined number continuous from the item button corresponding to the enlarged peripheral item button with which the indicator is in contact in the initial index being enlarged to have gradually smaller sizes than the second size as the buttons are apart from the enlarged peripheral item button with which the indicator is in contact, and being arranged in the first direction in an order identical to the order of the initial index.

3. The browsing assistance program for the electronic book according to claim 2,
wherein the program causes the controller to function as
a first page display switcher that performs page feed display that feeds a page of the electronic book displayed on the touch panel display, or page return display that returns the page when the contact position detector detects that the indicator in contact with the enlarged index is slid in a second direction different from the first direction.

4. The browsing assistance program for the electronic book according to claim 2,
wherein the program causes the controller to function as
a second page display switcher that performs index feed display that feeds a page of the electronic book displayed on the touch panel display in units of the items, or index return display that returns the page in units of the items, when the contact position detector detects that the indicator in contact with the enlarged index is slid in a third direction different from the first direction and is separated from the touch panel display.

5. The browsing assistance program for the electronic book according to claim 2,
wherein when the enlarged index displayer displays the enlarged index on the touch display, the enlarged index displayer displays a page of an item of the electronic book assigned with the selected item button on the touch panel display, and
when the enlarged index changer displays the enlarged shift display on the touch display, the enlarged index changer displays, on the touch panel display, a page of the item of the electronic book assigned with the item button corresponding to the enlarged peripheral item button with which the indicator is in contact.
